(19) Europäisches Patentamt / European Patent Office / Office européen des brevets

(11) **EP 2 530 303 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**26.08.2020  Patentblatt 2020/35**

(51) Int Cl.:
***F03D 7/02*** *(2006.01)*

(45) Hinweis auf die Patenterteilung:
**26.07.2017  Patentblatt 2017/30**

(21) Anmeldenummer: **12002187.8**

(22) Anmeldetag: **27.03.2012**

(54) **Verfahren zum Betreiben einer Windenergieanlage bei Auftreten eines Netzfehlers sowie eine solche Windenergieanlage**

A method of operating a wind turbine in case of a grid failure and a wind turbine operated according to this method

Une méthode d'exploitation d'une éolienne dans le cas de faute du réseau électrique et une éolienne exploitée selon cette méthode

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2011  DE 102011105854**

(43) Veröffentlichungstag der Anmeldung:
**05.12.2012  Patentblatt 2012/49**

(73) Patentinhaber: **Nordex Energy GmbH**
**22419 Hamburg (DE)**

(72) Erfinder:
• **Drossel, Detlef**
**22851 Norderstedt (DE)**

• **Fischle, Kurt**
**20253 Hamburg (DE)**

(74) Vertreter: **Hauck Patentanwaltspartnerschaft mbB**
**Postfach 11 31 53**
**20431 Hamburg (DE)**

(56) Entgegenhaltungen:

| | |
|---|---|
| EP-A1- 2 119 910 | WO-A2-2008/031434 |
| WO-A2-2009/083447 | WO-A2-2011/009958 |
| DE-A1-102005 029 000 | DE-A1-102007 060 958 |
| DE-A1-102008 010 543 | US-A1- 2008 277 938 |
| US-A1- 2009 206 606 | |

EP 2 530 303 B2

## Beschreibung

Die vorliegende Erfindung betrifft ein Verfahren zum Betreiben einer Windenergieanlage bei Auftreten eines Netzfehlers, wobei die Windenergieanlage einen Rotor mit mindestens einem in seinem Blatteinstellwinkel verstellbaren Rotorblatt, einen mit dem Rotor verbundenen Generator zur Erzeugung einer elektrischen Leistung und mindestens eine Einrichtung zum Erfassen eines Istwerts der Drehzahl des Generators, eines Werts des Blatteinstellwinkels und eines Istwerts einer für ein Generatormoment repräsentativen Größe, insbesondere einer Wirkleistung und/oder eines Wirkstroms aufweist. Ebenso betrifft die Erfindung eine Windenergieanlage zur Durchführung des Verfahrens.

Bei unerwarteten Netzfehlern kann die Windenergieanlage nicht weiterhin die maximale Leistung in das elektrische Netz einspeisen. Der hieraus resultierende schnelle Leistungseinbruch führt zu einem Drehzahlanstieg, auf den entsprechend durch eine Regelung des Blatteinstellwinkels reagiert wird. Hierbei können Schwingungen in der Drehzahl auftreten.

Aus WO 2009/083447 A2 ist ein Verfahren zum Betrieb einer Windenergieanlage bei einer geringen Netzspannung bekannt. Im Netzfehlerfall, wenn geringe Netzspannungen vorliegen, wird, ausgehend von der Schnelllaufzahl vor dem Netzfehler, der Pitchwinkel bei der aktuellen Leistung ermittelt. Eine Regelung für den Blatteinstellwinkel wird angesteuert, um während des Netzfehlers den erzeugten Strom konstant zu halten.

Aus US 6,921,985 B2 ist ein Verfahren zum Betrieb einer Windenergieanlage bei einem Netzfehler bekannt, bei dem eine unterbrechungsfreie Stromversorgung für die Blatteinstellwinkelregelung vorgesehen ist. Die unterbrechungsfreie Stromversorgung greift hierbei auf den Zwischenkreis zwischen netzseitigem und rotorseitigem Umrichter zurück. Mit dem Umschalten auf die unterbrechungsfreie Stromversorgung wird die Blatteinstellwinkelregelung durch die Steuerung der Windenergie-anlage aktiviert, um in Reaktion auf den Umschaltvorgang den Blattwinkel entsprechend verstellen.

Aus WO 2005/015012 A1 ist ein Verfahren zur Steuerung einer Windenergieanlage bei einem Netzfehler bekannt. Im Fall eines Netzfehlers wird ein Betriebsparameter der Windenergieanlage, beispielsweise die Temperatur, erfasst und die Blattwinkelregelung angesteuert, um die Temperatur innerhalb eines vorbestimmten Intervalls zu halten.

Aus WO 2008/031434 A2 ist ein Verfahren zur Steuerung einer Windenergieanlage bei einem Netzfehler bekannt, bei dem während des Netzfehlers der Blattwinkel solange erhöht wird, bis sich der Rotor nicht weiter beschleunigt. Die im Normalbetrieb übliche Regelung der Drehzahl wird während des Netzfehlers nicht durchgeführt. Die Erhöhung des Blattwinkels wird ausgelöst, wenn die von der Windenergieanlage abgegebene Wirkleistung 125 % der Nennwirkleistung beträgt.

Aus DE 10 2008 010 543 A1 ist ein Verfahren zum Betreiben einer Windenergie-anlage bei einem Netzfehler bekannt, bei dem bereits vor dem Ansteigen der Rotordrehzahl eine Einstellung des Blatteinstellwinkels eingeleitet wird, wobei die Rotor- oder Generatordrehzahl auf eine, sich aus einer im Netzfehlerfall vorliegenden elektrischen Größe und der aktuellen Windgeschwindigkeit ergebende, Solldrehzahl geregelt wird.

Aus US 2009/0206606 A1 ist ein Verfahren bekannt, bei dem für den Umrichter eines doppeltgespeisten Asynchrongenerators für die Bereitstellung von Blindleistung bevorzugt eine Skalarregelung im Gegensatz zu einer feldorientierten Regelung verwendet wird. Weiterhin wird auf eine Steuerung für den Blatteinstellwinkel abgestellt, die den Blatteinstellwinkel derart einstellt, dass die Drehzahl des Generators vor und während eines Netzfehlers annähernd konstant gehalten wird. Auch ein Blatteinstellwinkel, der Beschleunigungen vermeidet (no acceleration pitch angle), ist angesprochen.

Aus US 2008/0277938 A1 ist ein Verfahren bekannt, bei dem ein Netzfehler erkannt und bei erkanntem Netzfehler von einer ersten Steuerung für den Blatteinstellwinkel auf eine zweite Steuerung für den Blatteinstellwinkel umgeschaltet wird.

Aus DE 10 2007 060 958 A1 ist ein Verfahren zur Steuerung einer Windenergieanlage bekannt, bei dem ein Netzeinbruch erkannt und eine Drehmomentsteuereinheit auf einen Vorgabewert initialisiert wird. Mit dem Initialisieren wird die Drehmomentsteuerung am Ende des Netzeinbruchs auf einen vorbestimmten Drehmomentwert gesetzt, so dass das Schwingverhalten der Windenergieanlage bei Wiederkehr der Netzspannung deutlich verbessert wird. Zusätzlich erhält auch die Pitch-Steuereinheit am Ende des Netzeinbruchs einen Vorgabewert für den Blatteinstellwinkel.

Der Erfindung liegt die Aufgabe zugrunde, ein Verfahren und eine Windenergieanlage zur Verfügung zu stellen, mit denen nach einem Netzfehler eine schnelle

Lastreduzierung auf einen neuen stabilen Arbeitspunkt ohne Netztrennung möglich ist.

Erfindungsgemäß wird die Aufgabe durch ein Verfahren mit den Merkmalen aus Anspruch 1 und eine Windenergieanlage mit den Merkmalen aus Anspruch 10 gelöst.

Das erfindungsgemäße Verfahren dient zum Betreiben einer Windenergieanlage bei Auftreten eines Netzfehlers. Die Windenergieanlage weist einen Rotor mit mindestens einem in seinem Blatteinstellwinkel verstellbaren Rotorblatt, einen mit dem Rotor verbundenen Generator zur Erzeugung einer elektrischen Leistung sowie mindestens eine Einrichtung zum Erfassen eines Istwerts der Drehzahl des Generators, eines Werts des Blatteinstellwinkels und eines Istwerts einer für ein Generatormoment repräsentativen Größe, insbesondere einer Wirkleistung und/oder eines Wirkstroms auf. Die Einrichtung zur Erfassung der Generatordrehzahl muss nicht notwendigerweise die Drehzahl des Generators, sondern kann auch eine andere Drehzahl im Antriebsstrang messen und diese in eine Drehzahl des Generators umrechnen. Bei dem erfindungsgemäßen Verfahren erfolgt ein Erkennen eines Netzfehlers. Ferner erfolgt ein Erfassen der Wirkleistung und/oder des Wirkstroms und der Drehzahl, wenn ein Netzfehler erkannt wurde. In einem weiteren Schritt wird eine Änderung des Generatormoments aufgrund der erfassten Wirkleistung und/oder des erfassten Wirkstroms und der erfassten Drehzahl bestimmt. Bei einem auftretenden Netzfehler ist insbesondere die Änderung des Generatormoments eine kritische Größe. In einem weiteren Schritt wird eine Korrekturgröße für den Blatteinstellwinkel, abhängig von der Änderung des Generatormoments, ermittelt. Aus der Korrekturgröße für den Blatteinstellwinkel und einem drehzahlabhängigen Sollwert für den Blatteinstellwinkel wird ein korrigierter Sollwert für den Blatteinstellwinkel ermittelt. Der drehzahlabhängige Sollwert für den Blatteinstellwinkel ist der Sollwert, der im regulären Betrieb, abhängig von einem Istwert und einem Sollwert der Drehzahl, bestimmt wird. Das erfindungsgemäße Verfahren besitzt eine Reihe von Vorzügen. Ein Vorteil liegt darin, dass weiterhin mit dem drehzahlabhängigen Sollwert gearbeitet und so auf eine Änderung der Windgeschwindigkeit reagiert werden kann. Es wird lediglich eine Korrekturgröße zu dem drehzahlabhängigen Sollwert ermittelt. Weiterhin reagiert das erfindungsgemäße Verfahren sehr schnell auf den auftretenden Netzfehler, da es bereits bei Erkennen des Netzfehlers ausgelöst wird. Durch das schnelle Einsetzen des erfindungsgemäßen Verfahrens kann die Blatteinstellregelung schon auf Momentenänderungen reagieren, die sich in Folge des Netzfehlers ergeben. Bei dem Verfahren erfolgt das Erkennen des Netzfehlers abhängig von einer Fehlermeldung, die in einem Umrichter und/oder dem Generator der Windenergieanlage erzeugt wird.

In einer bevorzugten Ausgestaltung erfolgt das Erkennen des Netzfehlers abhängig von der Änderung einer Netzspannung und/oder einer Netzfrequenz. Hierbei kann vorgesehen sein, dass, wenn ein vorbestimmter Schwellwert der Netzspannung und/oder der Netzfrequenz unter- oder überschritten wird, ein Netzfehler erkannt ist. Beispielsweise wird der Netzfehler erkannt, wenn die Netzspannung um mehr als einen vorbestimmten Wert gegenüber einer Nennspannung absinkt.

Der erfasste Wert des Blatteinstellwinkels kann ein gemessener Istwert sein. Alternativ oder zusätzlich kann der erfasste Wert des Blatteinstellwinkels ein Sollwert für den Blatteinstellwinkel sein, der beispielsweise in einer Steuerung für den Blatteinstellwinkel vorliegt und aus dieser heraus erfasst wird.

In einer besonders bevorzugten Ausgestaltung des erfindungsgemäßen Verfahrens erfolgt ein Erfassen eines Istwerts oder Sollwerts für den Blatteinstellwinkel. Hierbei wird bei der Ermittlung der Korrekturgröße für den Blatteinstellwinkel, abhängig von der Änderung des Generatormoments, zusätzlich der Istwert oder Sollwert für den Blatteinstellwinkel berücksichtigt. Dieser Ausgestaltung der Erfindung liegt die Erkenntnis zugrunde, dass, abhängig von dem Istwert oder Sollwert für den Blatteinstellwinkel der Windenergieanlage, das von dem Rotorblatt aufgenommene Moment entsprechend eines nichtlinearen Zusammenhangs mit einer Änderung des Blatteinstellwinkels variiert. Insbesondere bei kleinen Blatteinstellwinkeln bewirkt eine Änderung des Blatteinstellwinkels eine geringere Änderung in dem Moment als bei großen Blatteinstellwinkeln.

In einer bevorzugten Ausgestaltung wird die Korrekturgröße für den Blatteinstellwinkel derart begrenzt, dass eine maximale Änderungsgeschwindigkeit für den Blatteinstellwinkel nicht überschritten wird. Auf diese Weise kann sichergestellt werden, dass die Regelung für den Blatteinstellwinkel nicht übersteuert wird oder Sollwerte vorgegeben werden, die nur mit deutlicher Verzögerung von der Regelung erreicht werden können.

In einer weiteren bevorzugten Ausgestaltung wird der drehzahlabhängige Sollwert für den Blatteinstellwinkel, wie beim regulären Betrieb, abhängig von der Drehzahl geregelt. Dies erlaubt es, die drehzahlabhängige Regelung des Blatteinstellwinkels auch im Falle eines Netzfehlers fortzuführen und erleichtert die Regelung bei Beendigung des Netzfehlers.

In einer bevorzugten Weiterbildung des erfindungsgemäßen Verfahrens wird die Korrekturgröße für den Blatteinstellwinkel nach Erkennen des Netzfehlers durch Schließen eines Schalters aufgeschaltet. Der Schalter kann in Hardware oder Software ausgeführt sein. Hierdurch kann erreicht werden, dass die Korrekturgröße unmittelbar nach Eintreten des Netzfehlers einen Beitrag zum Sollwert des Blatteinstellwinkels liefert.

Die erfindungsgemäße Aufgabe wird ebenfalls durch eine Windenergieanlage gelöst, die einen Rotor mit mindestens einem in seinem Blatteinstellwinkel verstellbaren Rotorblatt sowie eine Blatteinstellregelung aufweist, die für mindestens ein Rotorblatt einen drehzahlabhängigen Sollwert zur Einstellung des Blatteinstellwinkels ermittelt. Die Windenergieanlage besitzt ferner einen mit dem Rotor verbundenen Generator, der eine elektrische Leistung für ein elektrisches Versorgungsnetz erzeugt. Erfindungsgemäß ist eine Steuerung vorgesehen, die, ansprechend auf einen Netzfehler, eine Änderung des Generatormoments bestimmt und eine Korrekturgröße für den Blatteinstellwinkel, die von der Änderung des Generatormoments und einem Wert des Blatteinstellwinkels abhängig ist, an die Blatteinstellregelung weiterleitet, wobei die Blatteinstellregelung den Blatteinstellwinkel entsprechend einem korrigierten Sollwert einstellt, der sich aus dem drehzahlabhängigen Sollwert für den Blatteinstellwinkel und der Korrekturgröße für den Blatteinstellwinkel bestimmt. Bei der erfindungsgemäßen Windenergieanlage ist eine Steuerung vorgesehen, die auf einen Netzfehler anspricht und eine Korrekturgröße für den Blatteinstellwinkel erzeugt. Die Korrekturgröße für den Blatteinstellwinkel wird zu einem drehzahlabhängigen Sollwert für den Blatteinstellwinkel hinzugefügt, um einen korrigierten Sollwert für den Blatteinstellwinkel zu erhalten, der über eine Blatteinstellregelung eingestellt werden kann. Indem der Korrekturwert für den Blatteinstellwinkel unmittelbar ansprechend auf den Netzfehler erzeugt wird, kann die erfindungsgemäße Windenergieanlage schnell und zuverlässig auf den Netzfehler reagieren.

In einer bevorzugten Ausgestaltung wird der Korrekturwert für den Blatteinstellwinkel derart begrenzt, dass eine maximale Änderungsgeschwindigkeit für den Blatteinstellwinkel nicht überschritten wird.

Die vorliegende Erfindung wird anhand eines Ausführungsbeispiels näher erläutert. Es zeigt:

Fig. 1    ein Blockdiagramm einer Reglerstruktur zur Bestimmung eines korrigierten Sollwerts für den Blatteinstellwinkel,

Fig. 2    ein Blockdiagramm einer alternativen Reglerstruktur zur Bestimmung eines korrigierten Sollwerts für den Blatteinstellwinkel,

Fig. 3    einen Verlauf der Spannung über der Zeit bei einem Netzfehler,

Fig. 4    einen Verlauf der Wirkleistung über der Zeit bei einem Netzfehler und

Fig. 5    den Zusammenhang zwischen Moment und Blatteinstellwinkel.

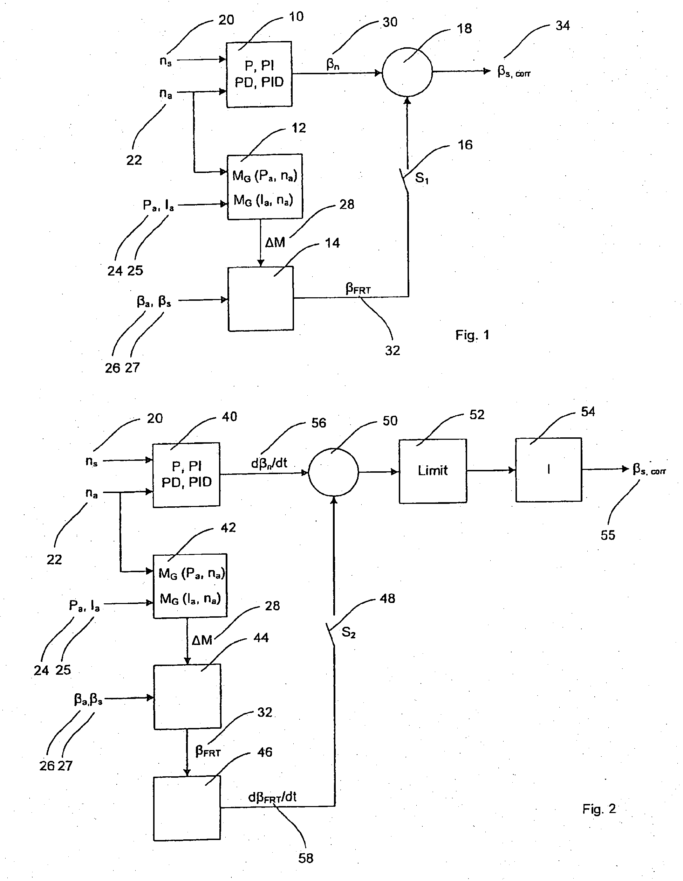

Fig. 1 zeigt in einer schematischen Ansicht eine Reglerstruktur zur Bestimmung eines korrigierten Sollwerts für einen Blatteinstellwinkel $\beta_{s,\,corr}$ 34. Als Eingangsgröße liegen an der Reglerstruktur der Sollwert für die Drehzahl $n_s$ 20 und der Istwert der Drehzahl $n_a$ 22 an. Ferner werden der Istwert der Wirkleistung $P_a$ 24 oder des Wirkstroms $I_a$ 25 und der Istwert oder der Sollwert des Blatteinstellwinkels $\beta_a$, $\beta_s$ 26, 27 verarbeitet.

Der Sollwert für die Drehzahl $n_s$ 20 und der Istwert für die Drehzahl $n_a$ 22 liegen an einem Regler 10 an. Der Regler 10 kann verschiedene Ausgestaltungen besitzen, wobei in jeder Ausgestaltung ein Proportionalglied P vorgesehen ist. Weiterhin kann je nach gewählter Ausgestaltung für den Regler 10 zusätzlich ein Integralglied I oder ein Differenzialglied D oder beides vorgesehen sein. Als Ergebnis liefert der Regler 10 einen Vorschlagswert für den Blatteinstellwinkel $\beta_n$ 30. Wenn der Schalter S1 16 geöffnet ist, wird der Vorschlagswert für den Blatteinstellwinkel $\beta_n$ 30 ohne Hinzufügen eines weiteren Blatteinstellwinkels im Additionsglied 18 als Sollwert für den Blatteinstellwinkel $\beta_{s,\,corr}$ 34 an nachfolgende (nicht dargestellte) Verstellantriebe für den Blatteinstellwinkel weitergeleitet.

Zusätzlich sieht die in Fig. 1 dargestellte Reglerstruktur vor, dass in Schritt 12 aus dem Istwert der Wirkleistung $P_a$ 24 und dem Istwert der Drehzahl $n_a$ 22 ein Generatormoment $M_G$ berechnet wird. Alternativ kann das Generatormoment $M_G$ auch aus einem Istwert eines Stroms $I_a$, beispielsweise einem Wirkstrom, berechnet werden. Die Berechnung des Generatormoments $M_G$ erfolgt hierbei über den Zusammenhang:

$$M_G = \frac{P_a \cdot 60}{2\pi \cdot n_a}.$$

Das so bestimmte Generatormoment $M_G$ wird fortlaufend berechnet und die zeitliche Änderung des Generatormoments $\Delta M$ 28, abhängig vom Istwert oder Sollwert für den Blatteinstellwinkel $\beta_a$, $\beta_s$ 26, 27, in einen zusätzlichen Sollwert für den Blatteinstellwinkel bei einem Netzfehler $\beta_{FRT}$ 32 umgerechnet. In dem Verfahrensschritt 14 findet, abhängig von der Änderung des Generatormoments $\Delta M$ 28, eine Verstärkung des Istwertes oder Sollwerts für den Blatteinstellwinkel $\beta_a$, $\beta_s$ 26, 27 statt, um den zusätzlichen Sollwert für den Blatteinstellwinkel bei einem Netzfehler $\beta_{FRT}$ 32 zu bestimmen. Insbesondere kann der Netzfehler durch das Auftreten eines Wertes von $\Delta M$ erkannt werden, der von null verschieden ist. Alternativ ist es auch möglich, einen Netzfehler durch eine Messung der Netzspannung zu erkennen. Im Fall eines Netzfehlers wird der Schalter S1 16 geschlossen, so dass sich der korrigierte Sollwert für den Blatteinstellwinkel $\beta_{s,\,corr}$ 34 als die Summe des Vorschlagswertes für den Blatteinstellwinkel $\beta_n$ 30 und des zusätzlichen Sollwerts für den Blatteinstellwinkel bei einem Netzfehler $\beta_{FRT}$ 32 ergibt.

Fig. 2 zeigt eine alternative Reglerstruktur, bei der weder ein Vorschlagswert für den Blatteinstellwinkel $\beta_n$ 30, noch ein zusätzlicher Sollwert für den Blatteinstellwinkel $\beta_{FRT}$ 32 ermittelt, sondern die zeitlichen Ableitungen dieser Größen in der Reglerstruktur verarbeitet werden. Der Vorteil, die zeitlichen Ableitungen dieser Größen in der Reglerstruktur zu verarbeiten, liegt darin, dass sich hierbei besonders leicht Geschwindigkeitsbegrenzungen definieren lassen, so dass Sollwerte für den Blatteinstellwinkel eine maximale Verstellgeschwindigkeit für den Blatteinstellwinkel am Rotorblatt berücksichtigen. Bei der alternativen Reglerstruktur gemäß Fig. 2 liegen ein Sollwert für die Drehzahl $n_s$ 20 und ein Istwert für die Drehzahl $n_a$ 22 an einem Regler 40 an. Der Regler 40 kann wieder als ein Regler mit einem Proportionalglied P ausgeführt sein, wobei zusätzlich ein Integralglied I und/oder ein Differenzialglied D vorgesehen sein kann. Anders als in dem Ausführungsbeispiel aus Fig. 1 wird die Ausgangsgröße des Reglers 40 als zeitliche Ableitung eines Vorschlagwerts für den Blatteinstellwinkel $d\beta_n/dt$ 56 angesehen und weiterverarbeitet.

Wie bereits bei der Reglerstruktur aus Fig. 1, wird die zeitliche Ableitung des Vorschlagswerts für den Blatteinstellwinkel $d\beta_n/dt$ 56 in dem Fall, dass kein Netzfehler vorliegt und der Schalter 48 somit geöffnet ist, über das Additionsglied 50 an ein Begrenzungsglied 52 weitergeleitet. Das Begrenzungsglied 52 begrenzt die zeitliche Ableitung des Vorschlagswerts für den Blatteinstellwinkel $d\beta_n/dt$ 56 auf einen zulässigen Maximalwert der Verstellgeschwindigkeit, der von den Verstellantrieben für den Blatteinstellwinkel erreicht werden kann. Die so begrenzte zeitliche Ableitung wird in einem nachfolgenden Schritt 54 über die Zeit integriert, so dass ein korrigierter Sollwert für den Blatteinstellwinkel $\beta_{s,\,corr}$ 55 die Ausgangsgröße der Reglerstruktur gemäß Fig. 2 bildet.

In einem Verfahrensschritt 42 wird, wie vorstehend erläutert, aus dem anliegenden Istwert für die Drehzahl $n_a$ 22 und dem Istwert für die Wirkleistung $P_a$ 24 das Generatormoment $M_G$ der Windenergieanlage berechnet und dessen zeitliche Änderung $\Delta M$ 28 bestimmt. Alternativ kann das Generatormoment $M_G$ auch aus dem Istwert eines Stroms $I_a$, beispielsweise einem Wirkstrom, berechnet werden. Abhängig von der zeitlichen Änderung des Generatormoments $\Delta M$ 28 wird der Istwert oder Sollwert für den Blatteinstellwinkel $\beta_a$, $\beta_s$ 26, 27 in Verfahrensschritt 44 verstärkt, um den zusätzlichen Sollwert für den Blatteinstellwinkel bei Vorliegen eines Netzfehlers $\beta_{FRT}$ 32 zu erhalten. Im Wesentlichen entspricht der Verfahrensschritt 44 aus Fig. 2 dem Verfahrensschritt 14 aus Fig. 1. In einem nachfolgenden Verfahrensschritt 46 wird der zusätzliche Sollwert für den Blatteinstellwinkel bei Vorliegen eines Netzfehlers $\beta_{FRT}$ 32 differenziert, so dass die zeitliche Ableitung des zusätzlichen Sollwerts für den Blatteinstellwinkel bei Vorliegen eines Netzfehlers $d\beta_{FRT}/dt$ 58 an dem Schalter 48 anliegt. Wird in Verfahrensschritt 42 durch die Änderung des Generatormoments $\Delta M$ 28 ein Netzfehler erkannt oder erfolgt aus anderen Gründen die Erkennung eines Netzfehlers, so werden der Schalter S2 48 geschlossen und die zeitlichen Ableitungen des Vorschlagswerts für den Blatteinstellwinkel $d\beta_n/dt$ 56 und des zusätzlichen Sollwerts für den Blatteinstellwinkel bei Vorliegen eines Netzfehlers $d\beta_{FRT}/dt$ 58 in Schritt 50 addiert. In einem nachfolgenden Schritt 52 erfolgt die Begrenzung der aus den zeitlichen Ableitungen gebildeten Summe auf die maximale Verstellgeschwindigkeit der Verstellantriebe für den Blatteinstellwinkel. Um für die Steuerung der Verstellantriebe einen Sollwert zur Verfügung zu stellen, wird mit dem nachfolgenden Integrator 54 der in Schritt 52 begrenzte Wert integriert und der korrigierte Sollwert für den Blatteinstellwinkel $\beta_{s,\,corr}$ 55 ausgegeben. Durch die zeitliche Ableitung des Blatteinstellwinkels, der aus einem steilen Leistungs- bzw. Momentenabfall errechnet wurde, kann die zeitliche Ableitung in Form eines kurzen Impulses vorliegen, der nur eine kurzfristige Verstellung des Blatteinstellwinkels bewirkt. Durch Schritt 52 und die Steuerung der Verstellantriebe für den Blatteinstellwinkel wird sichergestellt, dass der sich ergebende Sollwinkel auch verfahren wird.

Der besondere Vorteil der Reglerstrukturen aus Fig. 1 und Fig. 2 besteht darin, dass im Fehlerfall durch das Schließen des Schalters S1 16 oder S2 48 die entsprechenden Korrekturwerte 32, 58 aufgeschaltet werden kann, während die sonstige Bestimmung des Sollwerts weiterläuft. Dauert der Fehlerfall bis zu beispielsweise 3 Sekunden, so bleiben die Schalter S1 16 oder S2 48 auch über den Fehlerfall hinaus für eine vorbestimmte Zeit geschlossen.

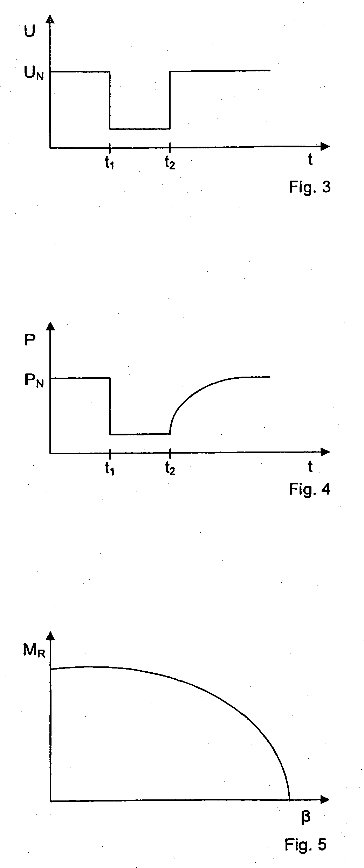

Fig. 3 zeigt einen zeitlichen Verlauf der Netzspannung U über der Zeit t bei Auftreten eines Netzfehlers. Zum Zeitpunkt $t_1$ tritt ein Spannungseinbruch auf, der bis zum Zeitpunkt $t_2$ dauert. Anschließend liegt wieder die Nennspannung $U_N$ im Netz vor.

Fig. 4 zeigt einen Verlauf der von der Windenergieanlage eingespeisten Wirkleistung P über der Zeit t, die in Folge der einbrechenden Netzspannung U in $t_1$ fällt und mit der einsetzenden Netzspannung U ab $t_2$ wieder auf die Nennleistung $P_N$ steigt.

Fig. 5 verdeutlicht die der Erfindung zugrundeliegende technische Problematik. Fig. 5 zeigt eine Rotorblattkurve bei Nennwind, bei der das Moment des Rotorblatts $M_R$ über dem Blatteinstellwinkel $\beta$ aufgetragen ist. Im Bereich von kleinen $\beta$-Werten ist deutlich zu erkennen, dass die Änderung des Moments $\Delta M_R$ nur schwach von einer Änderung des Blatteinstellwinkels $\Delta\beta$ abhängt. Wird also bei Auftreten eines Netzfehlers versucht, das Moment der Windenergieanlage mit einem herkömmlichen Regler für den Blatteinstellwinkel zu regeln, so ist diese Regelung sehr unempfindlich. Bei dem erfindungsgemäßen Verfahren wird entsprechend Fig. 2 bei der Umrechnung des Moments M in einen Korrekturwert $\beta_{sFRT}$ 36 durch eine von $\beta_a$ 26 abhängige Verstärkung 32 erreicht, dass der Korrekturwert für kleinere Werte von $\beta$ größer als für größere $\beta$-Werte ausfällt, da das Moment des Rotorblatts $M_R$ im Bereich kleinerer Werte von $\beta$ unempfindlicher für eine Änderung von $\beta$ ist.

## Patentansprüche

1. Verfahren zum Betreiben einer Windenergieanlage bei Auftreten eines Netzfehlers durch Abfall einer Netzspannung, wobei die Windenergieanlage einen Rotor mit mindestens einem in seinem Blatteinstellwinkel ($\beta$) verstellbaren Rotorblatt, einen mit dem Rotor verbundenen Generator zur Erzeugung einer elektrischen Leistung P und mindestens eine Einrichtung zum Erfassen eines Istwerts der Drehzahl des Generators ($n_a$), eines Werts des Blatteinstellwinkels ($\beta_a$, $\beta_s$) und eines Istwerts einer für ein Generatormoment ($M_G$) repräsentativen Größe aufweist, wobei der Istwert einer für das Generatormoment ($M_G$) repräsentativen Größe ein Istwert einer erzeugten Wirkleistung $P_a$ oder eines Wirkstroms Ia ist, mit folgenden Verfahrensschritten:

   • Erkennen eines Netzfehlers durch einen Abfall der Netzspannung um mehr als einen vorbestimmten Wert gegenüber einer Nennspannung, wobei das Erkennen des Netzfehlers abhängig von einer Fehlermeldung erfolgt, die in einem Umrichter und/oder dem Generator erzeugt wird,
   • Erfassen des Istwerts der für das Generatormoment ($M_G$) repräsentativen Größe und des Istwerts der Drehzahl des Generators ($n_a$),

wenn ein Netzfehler erkannt wurde,

• Bestimmen einer Änderung des Generatormoments ($\Delta_{MG}$),

• Erfassen des Werts für den Blatteinstellwinkel ($\beta_a$, $\beta_s$)

• Ermitteln einer Korrekturgröße für den Blatteinstellwinkel ($\beta_{FRT}$) abhängig von der Änderung des Generatormoments ($\Delta MG$) und dem Wert für den Blatteinstellwinkel ($\beta_a$, $\beta_s$),

• Bestimmen eines korrigierten Sollwerts für den Blatteinstellwinkel, der sich aus einem drehzahlabhängigen Sollwert für den Blatteinstellwinkel in einem regulären Betrieb und der ermittelten Korrekturgröße für den Blatteinstellwinkel ($\beta_{FRT}$) ergibt, wobei damit auf die Änderung des Generatormoments ($\Delta M_G$) reagiert wird, die sich in Folge des Netzfehlers ergibt.

2. Verfahren nach Anspruch 1, **dadurch gekennzeichnet, dass** ein Istwert des Blatteinstellwinkels erfasst wird.

3. Verfahren nach Anspruch 1 oder 2, **dadurch gekennzeichnet, dass** ein Sollwert des Blatteinstellwinkels erfasst wird.

4. Verfahren nach einem der Ansprüche 1 bis 3, **gekennzeichnet durch**

   • Erfassen des Istwerts oder Sollwerts für den Blatteinstellwinkel ($\beta_a$, $\beta_s$) und
   • Ermitteln der Korrekturgröße für den Blatteinstellwinkel abhängig von der Änderung des Generatormoments ($\Delta M_G$) und dem Istwert oder Sollwert für den Blatteinstellwinkel ($\beta_a$, $\beta_s$).

5. Verfahren nach einem der Ansprüche 1 bis 4, **dadurch gekennzeichnet, dass** die Korrekturgröße für den Blatteinstellwinkel als Winkel ($\beta_{FRT}$) bestimmt wird.

6. Verfahren nach einem der Ansprüche 1 bis 5, **dadurch gekennzeichnet, dass** die Korrekturgröße für den Blatteinstellwinkel als Änderungsgeschwindigkeit eines Winkels ($d\beta_{FRT}/dt$) bestimmt wird.

7. Verfahren nach einem der Ansprüche 1 bis 6, **dadurch gekennzeichnet, dass** die Korrekturgröße für den Blatteinstellwinkel derart begrenzt ist, dass eine maximale Änderungsgeschwindigkeit für den Blatteinstellwinkel nicht überschritten wird.

8. Verfahren nach einem der Ansprüche 1 bis 7, **dadurch gekennzeichnet, dass** der drehzahlabhängige Sollwert für den Blatteinstellwinkel in einem regulären Betrieb abhängig von einem Istwert und einem Sollwert der Drehzahl geregelt wird.

9. Verfahren nach einem der Ansprüche 1 bis 8, **dadurch gekennzeichnet, dass** die Korrekturgröße für den Blatteinstellwinkel nach Erkennen eines Netzfehlers aufgeschaltet wird.

10. Windenergieanlage mit einem Rotor, der mindestens ein in seinem Blatteinstellwinkel verstellbares Rotorblatt aufweist, einer Blatteinstellregelung, die für das mindestens eine Rotorblatt einen drehzahlabhängigen Sollwert zur Einstellung des Blatteinstellwinkels ermittelt, und mit einem mit dem Rotor verbundenen Generator, der eine elektrische Leistung für ein elektrisches Versorgungsnetz erzeugt, **dadurch gekennzeichnet, dass** eine Steuerung vorgesehen ist, die ansprechend auf einen Netzfehler durch einen Abfall einer Netzspannung um mehr als einen vorbestimmten Wert gegenüber einer Nennspannung eine Änderung eines Generatormoments bestimmt, wobei der Istwert der für das Generatormoment (MG) repräsentativen Größe und der Istwert der Drehzahl des Generators ($n_a$) erfasst wird, wenn der Netzfehler erkannt wurde und die eine Korrekturgröße für den Blatteinstellwinkel abhängig von der Änderung des Generatormoments und einem Wert für den Blatteinstellwinkel an die Blatteinstellregelung weiterleitet, wobei das Erkennen des Netzfehlers abhängig von einer Fehlermeldung erfolgt, die in einem Umrichter und/oder dem Generator erzeugt wird, und die Blatteinstellregelung den Blatteinstellwinkel entsprechend einem korrigierten Sollwert einstellt, der sich aus dem drehzahlabhängigen Sollwert für den Blatteinstellwinkel in einem regulären Betrieb und der Korrekturgröße für den Blatteinstellwinkel ergibt, wobei damit auf die Änderung des Generatormoments reagiert wird, die sich in Folge des Netzfehlers ergeben.

11. Windenergieanlage nach Anspruch 10, **dadurch gekennzeichnet, dass** die Korrekturgröße für den Blatteinstellwinkel derart begrenzt ist, dass eine maximale Änderungsgeschwindigkeit für den Blatteinstellwinkel nicht überschritten wird.

**Claims**

1. A method of operating a wind turbine in case of a grid failure due to a drop of a mains voltage, wherein the wind turbine comprises a rotor with at least one rotor blade which can be adjusted in its blade pitch angle ($\beta$), a generator connected to the rotor for generating an electrical power (P) and at least one device for capturing an actual value of the rotational speed of the generator ($n_a$), a value of the blade pitch angle ($\beta_a$, $\beta_b$) and an actual value of a variable which is representative for the generator torque ($M_G$), wherein the actual value of a variable which is representative for the generator torque ($M_G$) is an actual value of a generated effective power ($P_a$) or an active current ($I_a$), the method having the following procedural steps:

    • recognizing a grid failure by a drop of the mains voltage by more than a predetermined value compared to a nominal voltage, wherein the recognition of the grid failure takes place depending on an error message which is generated in an inverter and/or in the generator,
    • capturing the actual value of the variable which is representative for the generator torque ($M_G$) and of the actual value of the rotational speed of the generator ($n_a$) when a grid failure has been recognized,
    • identifying a change of the generator torque ($\Delta M_G$),
    • capturing the value for the blade pitch angle ($\beta_a$, $\beta_b$),
    • determining a corrective value for the blade pitch angle ($\beta_{FRT}$) depending on the change of the generator torque ($\Delta M_G$) and on the value for the blade pitch angle ($\beta_a$, $\beta_b$),
    • determining a corrected desired value for the blade pitch angle which results from a rotational speed-dependent desired value for the blade pitch angle in a regular operation and the determined corrective value for the blade pitch angle ($\beta_{FRT}$), wherein through this it is reacted to the change of the generator torque ($\Delta M_G$) which results as a consequence of the grid failure.

2. The method according to claim 1, **characterised in that** an actual value of the blade pitch angle is captured.

3. A method according to claim 1 or 2, **characterised in that** a desired value of the blade pitch angle is captured.

4. A method according to any one of claims 1 to 3, **characterised by**

    • capturing the actual value or the desired value for the blade pitch angle ($\beta_a$, $\beta_b$), and
    • determining the corrective value for the blade pitch angle depending on the change of the generator torque ($\Delta M_G$) and on the actual value or the desired value for the blade pitch angle ($\beta_a$, $\beta_b$).

5. A method according to any one of claims 1 to 4, **characterised in that** the corrective value for the blade pitch angle is determined as an angle ($\beta_{FRT}$).

6. A method according to any one of claims 1 to 5, **characterised in that** the corrective value for the blade pitch angle is determined as a rate of change of an

angle ($d\beta_{FRT}/dt$).

7. A method according to any one of claims 1 to 6, **characterised in that** the corrective value for the blade pitch angle is limited in such a manner that a maximum rate of change for the blade pitch angle will not be exceeded.

8. A method according to any one of claims 1 to 7, **characterised in that** in a regular operation, the rotational speed-dependent desired value for the blade pitch angle is controlled depending on an actual value and a desired value for the rotational speed.

9. A method according to any one of claims 1 to 8, **characterised in that** the corrective value for the blade pitch angle is applied after the recognition of a grid failure.

10. A wind turbine with a rotor, which comprises at least one rotor blade which can be adjusted in its blade pitch angle, with a blade pitch control which determines a rotational speed-dependent desired value for the adjustment of the blade pitch angle for the at least one rotor blade, and with a generator connected to the rotor which generates an electric power for an electric supply grid,
**characterised in that**
a control is provided, which in response to a grid failure due to a drop of a mains voltage by more than a predetermined value compared to a nominal voltage determines a change of a generator torque, wherein the actual value of the quantity representative of the generator torque ($M_G$) and the actual value of the speed of the generator ($n_a$) are captured when the grid failure is detected, and which forwards a corrective value for the blade pitch angle depending on the change of the generator torque and on a value for the blade pitch angle to the blade pitch control, wherein the recognition of the grid failure takes place depending on an error message which is generated in an inverter and/or in the generator, and the blade pitch control adjusts the blade pitch angle corresponding to a corrected desired value which results from the rotational speed-dependent desired value for the blade pitch angle in a regular operation and the corrective value for the blade pitch angle, wherein through this it is reacted to the change of the generator torque which results as a consequence of the grid failure.

11. The wind turbine according to claim 10, **characterised in that** the corrective value for the blade pitch angle is limited in such a manner that a maximum rate of change for the blade pitch angle will not be exceeded.

## Revendications

1. Méthode d'exploration d'une éolienne dans le cas de faute du réseau électrique par la décroissance d'une tension du réseau, l'éolienne comprenant un rotor avec au moins une pale de rotor qui peut être ajustée dans son pas de pale ($\beta$), un générateur accolé au rotor pour la génération d'une puissance électrique P et au moins un dispositif pour saisir une valeur réelle de la vitesse de rotation du générateur ($n_a$), une valeur du pas de pale ($\beta_a, \beta_b$) et une valeur réelle d'une variable qui est représentative pour le couple du générateur ($M_G$), la valeur réelle d'une variable qui est représentative pour le couple du générateur ($M_G$) étant une valeur réelle d'une puissance active $P_a$ générée ou d'un courant actif $I_a$, la méthode ayant les étapes du procédé suivantes:

   • percevoir une faute du réseau par la décroissance d'une tension du réseau de plus d'une valeur prédéterminée par rapport à une tension nominale, la perception de la faute du réseau ayant lieu dépendant d'une indication d'erreur qui est générée dans un convertisseur et/ou dans le générateur,
   • saisir la valeur réelle de la variable qui est représentative pour le couple du générateur (MG) et de la valeur réelle de la vitesse de rotation du générateur ($n_a$) quand une faute du réseau était découverte,
   • assigner un changement du couple du générateur ($\Delta M_G$),
   • saisir la valeur pour le pas de pale ($\beta_a, \beta_b$),
   • établir une valeur de correction pour le pas de pale ($\beta_{FRT}$) dépendant du changement du couple du générateur ($\Delta M_G$) et de la valeur pour le pas de pale ($\beta_a, \beta_b$),
   • assigner une valeur de consigne corrigée pour le pas de pale qui résulte d'une valeur de consigne pour le pas de pale en fonction de la vitesse de rotation lors d'un fonctionnement normal et de la valeur de correction établie pour le pas de pale ($\beta_{FRT}$), en réactant par cela au changement du couple du générateur ($\Delta M_G$) qui résulte comme la conséquence de la faute du réseau.

2. Méthode selon la revendication 1, **caractérisée en ce qu'**une valeur réelle du pas de pale est saisie.

3. Méthode selon la revendication 1 ou 2, **caractérisée en ce qu'**une valeur de consigne du pas de pale est saisie.

4. Méthode selon l'une quelconque des revendications 1 à 3, **caractérisée par** les étapes de

   • saisir la valeur réelle ou la valeur de consigne pour le pas de pale ($\beta_a, \beta_b$), et
   • établir la valeur de correction pour le pas de pale dépendant du changement du couple du générateur ($\Delta M_G$) et de la valeur réelle ou de la valeur de consigne pour le pas de pale ($\beta_a, \beta_b$).

5. Méthode selon l'une quelconque des revendications 1 to 4, **caractérisée en ce que** la valeur de correction pour le pas de pale est assignée comme un angle ($\beta_{FRT}$).

6. Méthode selon l'une quelconque des revendications 1 to 5, **caractérisée en ce que** la valeur de correction pour le pas de pale est assignée comme une vitesse de changement d'un angle (d $\beta_{FRT}$/dt).

7. Méthode selon l'une quelconque des revendications 1 to 6, **caractérisée en ce que** la valeur de correction pour le pas de pale est limitée tellement qu'un changement maximal pour le pas de pale ne sera jamais dépassé.

8. Méthode selon l'une quelconque des revendications 1 to 7, **caractérisée en ce que** dans une opération régulière, la valeur de consigne pour le pas de pale dépendant de la vitesse de rotation est réglée en fonction d'une valeur réelle et d'une valeur de consigne de la vitesse de rotation.

9. Méthode selon l'une quelconque des revendications 1 to 8, **caractérisée en ce que** la valeur de correction pour le pas de pale est appliquée après la perception d'une faute du réseau.

10. Éolienne avec un rotor, qui comporte au moins une pale de rotor qui peut être ajustée dans son pas de pale, avec une commande pour le pas de pale qui établit une valeur de consigne pour l'ajustage du pas de pale en fonction de la vitesse de rotation pour l'au moins une pale de rotor, et avec un générateur accolé au rotor qui génère une puissance électrique pour un réseau d'approvisionnement électrique, **caractérisée en ce que**
une commande est prévue, qui établit un changement du couple du générateur en réponse à une faute du réseau par la décroissance d'une tension du réseau de plus d'une valeur prédéterminée par rapport à une tension nominale, la valeur réelle de la grandeur représentative du couple de générateur ($M_G$) et la valeur réelle de la vitesse de rotation du générateur ($n_a$) étant établies lorsque la faute de réseau a été reconnue, et qui transmet à la commande pour le pas de pale une valeur de correction pour le pas de pale en fonction du changement du couple du générateur et d'une valeur pour le pas de pale, la perception de la faute du réseau ayant lieu en fonction d'une an indication d'erreur qui est générée dans un convertisseur et/ou dans le générateur, et la commande du pas de pale ajustant le pas de pale conformément à une valeur de consigne corrigée qui résulte de la valeur de consigne pour le pas de pale en fonction de la vitesse de rotation lors d'un fonctionnement normal et de la valeur de correction pour le pas de pale, en réactant par cela au changement du couple du générateur qui résulte comme la conséquence de la faute du réseau.

**11.** Éolienne selon la revendication 10, **caractérisée en ce que** la valeur de correction pour le pas de pale est limitée tellement qu'un changement maximal pour le pas de pale ne sera jamais dépassé.

Fig. 1

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- WO 2009083447 A2
- US 6921985 B2
- WO 2005015012 A1
- WO 2008031434 A2
- DE 102008010543 A1
- US 20090206606 A1
- US 20080277938 A1
- DE 102007060958 A1